(19) Europäisches Patentamt
European Patent Office
Office européen des brevets

(11) **EP 2 996 479 B1**

(12) **EUROPEAN PATENT SPECIFICATION**

(45) Date of publication and mention
of the grant of the patent:
**15.08.2018 Bulletin 2018/33**

(51) Int Cl.:
*A21D 2/18* (2006.01)        *A21D 8/04* (2006.01)
*A23L 27/30* (2016.01)       *A23L 33/00* (2016.01)
*A21D 2/14* (2006.01)

(21) Application number: **14721786.3**

(22) Date of filing: **16.04.2014**

(86) International application number:
**PCT/EP2014/057792**

(87) International publication number:
**WO 2014/177390 (06.11.2014 Gazette 2014/45)**

(54) **A METHOD FOR MAKING A SOFT CAKE BATTER**

VERFAHREN ZUR HERSTELLUNG EINES LOCKEREN KUCHENTEIGS MIT MINDESTENS 40
GEWICHTSPROZENT GETREIDEMATERIAL NACH DEM BACKEN

PROCÉDÉ DE FABRICATION D'UNE PÂTE À GÂTEAUX SOUPLE COMPRENANT AU MOINS 40
WT.% MATIÈRES CÉRÉALIÈRES APRÈS CUISSON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.04.2013 EP 13305561**

(43) Date of publication of application:
**23.03.2016 Bulletin 2016/12**

(73) Proprietor: **Generale Biscuit
92140 Clamart (FR)**

(72) Inventors:
• **CLEMENT, Jerome
F-91400 Gif sur Yvette (FR)**
• **NOTARDONATO, Lelia
F-92160 Hauts de Seine (FR)**
• **DIRY, Michel
F-45300 Centre (FR)**

(74) Representative: **Boult Wade Tennant LLP
Verulam Gardens
70 Gray's Inn Road
London WC1X 8BT (GB)**

(56) References cited:
**DE-A1- 3 504 686**

• **Anonymous: "Backen mit Hermann und
Siegfried", , 7 May 2008 (2008-05-07), pages 1-8,
XP002712118, Retrieved from the Internet:
URL:http://www.bulldogboard.eu/hund-im-all
tag/backen-mit-hermann-und-siegfried-t8795 .ht
ml [retrieved on 2013-08-30]**
• **Lutz Geissler: "Marmorkuchen mit Sauerteig
nach Pöt", , 14 March 2012 (2012-03-14), pages
1-2, XP002712119, Retrieved from the Internet:
URL:http://www.ploetzblog.de/2012/03/14/ma
rmorkuchen-mit-sauerteig-nach-poet/ [retrieved
on 2013-09-02]**
• **Anonymous: "Mandel Nusskuchen mit
Rosinen", , 10 December 2007 (2007-12-10),
pages 1-2, XP002712120, Retrieved from the
Internet:
URL:http://www.der-sauerteig.com/phpBB2/vi
ewtopic.php?t=2774 [retrieved on 2013-09-02]**
• **DATABASE GNPD [Online] MINTEL; 1 July 2011
(2011-07-01), Anonymous: "Breakfast Cake with
Fruit", XP002712121, Database accession no.
1580757**
• **DATABASE GNPD [Online] MINTEL; 1 December
2012 (2012-12-01), Anonymous: "Mini Fudgy
Chocolate Cake", XP002712122, Database
accession no. 1938683**
• **R. JYOTSNA ET AL: "Improvement of Rheological
and Baking Properties of Cake Batters with
Emulsifier Gels", JOURNAL OF FOOD SCIENCE,
vol. 69, no. 1, 1 January 2004 (2004-01-01), pages
SNQ16-SNQ19, XP055077349, ISSN: 0022-1147,
DOI: 10.1111/j.1365-2621.2004.tb17880.x**

• GOMEZ M ET AL: "Effect of fibre size on the quality of fibre-enriched layer cakes", LWT-FOOD SCIENCE AND TECHNOLOGY, ACADEMIC PRESS, UNITED KINGDOM, vol. 43, no. 1, 1 January 2010 (2010-01-01), pages 33-38, XP026626269, ISSN: 0023-6438, DOI: 10.1016/J.LWT.2009.06.026 [retrieved on 2009-07-04]

**Description**

Technical field

The present application relates to the field of soft cakes. In particular, the present application relates to a soft cake comprising at least 40 wt.% cereals after baking, the percentage being against the total weight of the soft cake.

The present application further relates to the field of methods for making a soft cake batter. In particular, the present application relates to methods for making a soft cake batter comprising at least 40 wt.% cereals after baking.

The present application also relates to the field of methods for producing a soft cake from said soft cake batter.

Prior art

Soft cakes result from compositions and processes, which are numerous and stem from centuries of baker's practice and regional inputs. The typical ingredients for a soft cake are cereal material (usually wheat flour), egg, fat (usually butter or oil), sugars and leavening agent.

Currently available soft cakes contain between 18 to 36 wt.% cereal material, usually in the form of flour. This percentage is calculated based on the finished soft cakes.

In order to make nutritious healthy soft cakes, it would be necessary to increase the amount of cereal material in the soft cakes.

Bakery products with a high amount of cereal material exist such as bread, brioches, panettone, pains au lait, pandori, etc. However, these products cannot be considered to be soft cakes. Indeed, the appearance of these products and their texture are not similar to those of soft cakes. Further, unlike soft cakes, these products require gluten network formation, whereas in soft cakes there is no formation of any gluten network. Also, these products usually have a higher water content.

Since the cereal material in a soft cake is typically provided in the form of flour, a way to increase the amount of cereal material would be to increase the amount of flour.

However, increasing the amount of flour in the soft cake batter would result in an increase in the soft cake batter consistency, which would lead to machinability issues with standard industrial equipment used to pour liquid soft cake batter. This would also reduce the soft cake volume once baked, which would give a poorly attractive shape to the soft cakes. It would also speed up the crumb staling and/or hardness, thus reducing shelf life. Increasing the amount of flour would also lead to the formation of cavities in the product, increasing the crumbliness of the soft cake. All these drawbacks would lead to a reduction in consumer acceptance of the soft cakes.

A conventional solution for lowering the viscosity of a batter is to increase liquid ingredients of the batter such as water.

However, the addition of water makes the baking difficult since a longer time in the oven is needed for extracting the additional water. This may give a crust with a brown colour and a burnt taste, while the crumb may still have an uncooked taste and poor sensory properties. Another risk pertaining to the addition of water is the formation of a gluten network, which, as discussed above, cannot be present in a soft cake. In particular, the batter would become a stiff dough, which is no longer liquid meaning that the final product could no longer be considered a soft cake.

Additional oil can also be added into the batter for reducing viscosity. However, little flexibility is possible with regard to oil content of the batter since the final soft cake should remain a healthy food product.

Therefore, there remains a need for a method for producing acceptable soft cakes with a high amount of cereal material (namely above 40 wt.% of the final soft cake).

The recipe: "Marmorkuchen mit Sauerteig nach Pöt" from http://www.ploetzblog.de/2012/03/14/marmorkuchen-mit-sauerteig-nach-poet/ (14 March 2012) discloses a marble cake made with sourdough.

Summary

There is described herein a method for making a soft cake batter comprising at least 40 wt.% cereal material after baking, the method comprising:

- providing flour, culture and other ingredients for the soft cake;
- mixing and proofing a portion of flour representing at least 25 wt.% of the total flour to be incorporated into the soft cake batter with water and culture to form a sourdough;
- mixing the sourdough with the remaining flour and the other ingredients for forming the soft cake batter comprising at least 40 wt.% cereal material after baking.

There is also described herein a method for producing a soft cake, the method comprising:

- providing a soft cake batter according to the first embodiment;
- pouring the soft cake batter into a pan;
- baking the soft cake batter in the pan for producing the soft cake.

There is also described herein a soft cake comprising at least 40 wt.% cereals, at most 30 wt.% sugars, preferably 27.5 %, and at most 40 %, preferably at most 35 %, of energy originate from fat, said weight percentages being relative to total weight of the soft cake.

There is also described herein a soft cake batter comprising flour, water and culture, wherein at least 25 wt.% of the flour is fermented flour, preferably 30 wt.%, more preferably at least 40 wt.%, still preferably at least 60 wt., still more preferably 65 wt.%.

According to a first aspect, there is provided a method in accordance with claim 1.

Drawings

The invention will now be described in relation to the following non-limiting figures, in which:

Figure 1 is a flowchart that illustrates the steps of a method for making a soft cake comprising at least about 40 wt.% cereals after baking described below, wherein the portion of flour used for the sourdough is incorporated in a single step;

Figure 2 is a flowchart that illustrates the steps of a method for making a soft cake comprising at least about 40 wt.% cereals after baking described below, wherein the portion of flour used for the sourdough is incorporated in more than one step; and

Figure 3 represents a CRC graph showing the force applied to a soft cake according to time. The y-axis shows force in N. The x-axis shows time in seconds. The region between 0 and F1 is 10% compression. The region between F1 and F2 is relaxation and the region between F2 and F3 is 50% compresssion.

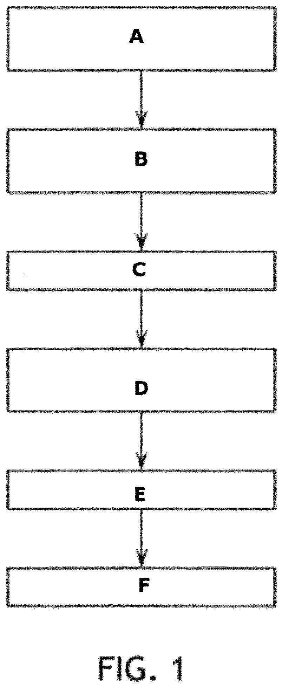

In particular, Figure 1 shows the steps of:

A - Providing flour, water and ferment
B - Mixing a portion of flour with water and ferment
C - Proofing the mixture
D - Mixing sourdough with other ingredients
E - Pouring the batter into pans
F - Baking in pans

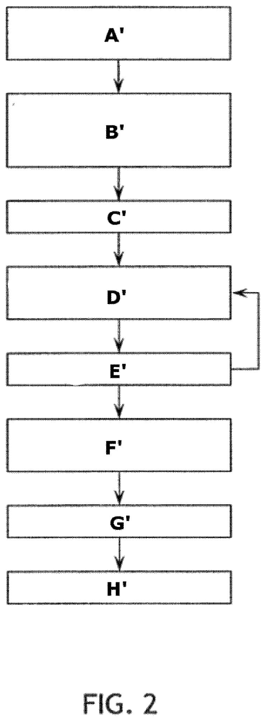

In particular, Figure 2 shows the steps of:

A' - Providing flour, water and ferment
B' - Mixing a first sub-portion of flour with water and ferment
C' - Proofing the mixture
D' - Adding a further subportion of flour into the mixture
E' - Proofing again
F' - Mixing sourdough with other ingredients
G' - Pouring the batter into pans
H' - Baking in pans

Description

The present disclosure is aimed at providing a method that enables the production of soft cakes with a high amount of cereal material, namely at least about 40 wt.% of the final soft cake. Of course, it is desirable for the incorporation of such high levels of cereal material not to be of detriment to the quality of the soft cake, and the soft cake should present all of the usual features associated with such products.

There is described herein a method for making a soft cake batter comprising at least about 40 wt.% cereals after baking, the method comprising:

- providing flour, water, culture and optionally other ingredients for the soft cake;
- mixing and proofing a portion of flour representing at least about 25 wt.% of the total flour to be incorporated into the soft cake batter with water and culture to form a sourdough; and
- mixing the sourdough with the remaining flour and optionally the other ingredients for forming a batter. In this application the word "soft cake" means a soft sweet food made from a mixture of flour, sugars, and other ingredients.

The soft cake is baked and sometimes iced or decorated. Unlike bread, brioche, panettone, pains au lait, pandori, etc. (bread-like baked products), a batter for soft cake does not contain any gluten network. Gluten is a composite of gliadin and glutenin. A gluten network is formed when glutenin molecules cross-link, that is, where the cross-linked glutenin is attached to gliadin molecules. In bread-like baked products, the gluten network helps with trapping of air bubbles produced during the baking process. Furthermore, it helps the dough rise high and, in the case of bread-like baked products such as panettone it helps to support the fruit pieces. When the batter is baked, the gluten network undergoes denaturation, which, along with starch, contributes to the shape of the final product.

A soft cake presents a texture of crumb being much less elastic than bread or bread-like products. No yeast is used in such soft cakes for soft cake expansion; rather, if needed only chemical leavening agents are used.

Examples of soft cakes includes angel cakes, shortened cakes, butter cakes, sponge cakes, yellow layer cakes, white layer cakes, cupcakes, pound cakes (including quatre-quarts), chiffon cakes, roulades, genoises, madeleines, muffins, Christmas cakes, etc.

Such soft cakes have a long shelf life in comparison to bread, brioche, panettone, pains au lait, pandori, etc. Shelf life is typically longer than about 4 months, preferably longer than about 6 months, more preferably from about 6 to about 12 months at ambient temperature.

The viscosity of the sourdough is about 0 Pa.s to about 500 Pa.s, preferably about 5 Pa.s to about 350 Pa.s, and more preferably about 5 Pa.s to about 200 Pa.s.

In this application, the word "batter" means a semi-liquid to liquid mixture of flour, water, culture, and other ingredients that can be poured. A batter has a viscosity comprised between about 10 Pa.s and about 500 Pa.s, preferably between about 30 Pa.s and about 250 Pa.s. Batter viscosity is measured by Brookfield apparatus. One example is given below. In this application, the word "cereal material" means all cereal ingredients or ingredients derived from cereals used in the production of the soft cake batter and the soft cake. Suitable cereal material may comprise cereal flour, cereal flakes, whole or hacked cereal grains and seeds, cereal bran, cereal fibres, etc. Suitable cereals may be wheat, rice, barley, spelt, oat, rye, millet, sorghum, triticale, teff. Pseudo cereals such as amaranth and quinoa are also suitable.

Preferably, the soft cake batter comprises at least about 42 wt.% of cereal material against the total weight of the soft cake after baking, more preferably at least about 44 wt.%. Preferably the soft cake batter comprises at most 50 wt.% of cereal material against the total weight of the soft cake after baking.

In this application, "culture" means any suitable fermenting agent. Suitable fermenting agents include

- bacteria, preferably chosen from the group consisting of lactic acid bacteria such as *Lactobacillus* (for example *L. plantarum, L.brevis, L.sanfranciscensis*...), *Lactococcus, Streptococcus, Pediococcus, Leuconostoc,, Weissella*),, *Bifidobacterium, Pseudomonas,* and bacteria of the Enterobacteriaceae family, and mixtures thereof.
- yeast, preferably chosen from the group consisting of *Saccharomyces, Candida, Pichia* (formerly known as *Hansenula*), *Cryptococcus, Rhodotorula, Torulaspora, Trichosporon, Sporobolomyces* and mixtures thereof.

Culture may be culture naturally contained in the flour. That means culture is not added separately from flour. Preferably, however, "culture" is added culture, meaning that culture is added separately from flour. Added culture helps culture naturally present in the flour with the fermentation process. For example, about 0.002 wt.% to about 0.03 wt.% of culture can be incorporated in the sourdough, for culture containing about $2 \cdot 10^{11}$ cfu/g.

In this application, the word "proof" means resting a composition comprising flour and water to allow fermentation. Flour naturally contains culture that is responsible for the fermentation. Preferably, the proofing is carried out at a temperature ranging from about 10 °C to about 55 °C for about 30 min to about 24 hours for boosting fermentation of the sourdough.

During the proofing, significant changes in the mixture properties occur such as viscosity and pH drop. In addition, the total titrable acidity (TTA) value increases.

The present inventors have discovered that proofing at least about 25 wt.% of the total flour to incorporate into the soft cake batter makes it possible to obtain a pourable soft cake batter, and that this soft cake batter may be baked into a soft cake with good sensory properties. This soft cake is particularly suitable for breakfast meals since it has a good nutritional profile and contains a large amount of cereal materials.

It is been found, surprisingly, that the short proofing times described above are achievable even when a high proportion of total flour is incorporated into the initial mixture.

It is also possible to use at least about 30 wt.%, more preferably at least about 40 wt.% of the total flour to form the sourdough, more preferably at least about 50 wt.%, still preferably at least about 60 wt.%, still more preferably at least about 65 wt.%. Preferably at most 90 wt.% of the total flour is used to form the sourdough.

Forming the sourdough may be carried out in different manners including the following variants.

In a first variant, forming the sourdough comprises mixing the portion of flour with water and culture to form a mixture; and proofing the mixture to form a sourdough (see figure 1).

In a second variant (see figure 2), forming the sourdough comprises dividing the portion of flour into at least two sub portions;

- mixing a sub portion of flour with water and culture;
- proofing the resulting mixture;

repeating the above in iterative manner for each of the remaining sub portions:

- adding a sub portion of flour into the proofed mixture;
- proofing the resulting mixture;

thus, forming a sourdough.

If less than about 80 wt.% of the total flour is used for forming the sourdough, the first variant is preferably used.

If more than about 80 wt.% of the total flour is used for forming the sourdough, the second variant is preferably used.

In this application, "sourdough" means a liquid to semi-liquid composition made from a mixture comprising at least flour, water and culture, the mixture being proofed for a given time at a given temperature.

The flour content of the sourdough may be about 50 wt.% to about 75 wt.%, weight percentage being relative to total weight of the sourdough, preferably about 55 wt.% to about 75 wt.%, more preferably about 60 wt.% to about 75 wt.%, and still more preferably about 65 wt.% to about 75 wt.%, weight percentage being relative to total weight of the sourdough.

The flour is preferably chosen from the group consisting of: wheat flour, corn flour, oat flour, barley flour, rye flour, spelt flour, millet flour, sorghum flour, teff flour, triticale flour, pseudocereal flour such as amaranth flour and quinoa flour, and mixtures thereof. Preferably, the flour is wheat flour. A part of the flour is preferably a wholegrain cereal flour, for example at least about 5 wt.%. Wholegrain cereals retain the bran and germ unlike refined cereals that only contain the endosperm.

One or more enzymes can also be provided and mixed with flour, water and culture to form a mixture. Thus, the mixture further contains one or more enzymes for boosting the proofing of the mixture and thus shortening the time necessary for reaching a workable viscosity. As such, the resulting batter may include one or more enzymes. It is to be understood that where the batter includes one or more enzymes, these are in addition to any enzymes which may be present in any of the other starting materials.

The enzymes that can be used are chosen from the group consisting of: amylases, amyloglucosidase, proteases, hemicellulases, xylanases, cellulase, pullulanase, pentosanases, lipases, phospholipases, transglutaminases, glucose oxydase or mixtures thereof. Preferably the one or more enzymes are present in the mixture in an amount of from 0.005 to 0.1 wt%, more preferably from 0.01 to 0.09 wt%, still more preferably from 0.05 to 0.08 wt%, based on the total weight of the mixture before proofing.

Use of enzymes for soft cake production has already been described, for example in WO2008/092907 and EP1145637. However, in these documents, the enzymes are added during mixing of the ingredients just before baking. There is no specific fermentation step. Therefore, at the time of the present invention, it was unpredictable what results would be obtained when enzymes are added to a sourdough. Indeed, sourdough has a more acidic pH than classical batter, which may influence the solubility or activity of enzymes in an unpredictable manner.

Glycerol can further be provided and mixed with flour, water and culture and/or enzyme(s) for forming a mixture. Glycerol is used to speed up the viscosity reduction of the sourdough. This also enables the shortening of the proofing time of the mixture. For example about 10 % to about 100 % of the total amount of glycerol to be used in the recipe can be incorporated in the sourdough, preferably from about 20% to about 80%, more preferably from about 35% to about 65%.

Acid may also be provided and mixed with the flour and water, possibly also the culture and/or enzyme(s) and/or glycerol used in forming the mixture. Acid is used to speed up the viscosity reduction of the sourdough. Acid also helps with the shortening of proofing time. Suitable acids may be chosen from the group consisting of lactic acid, acetic acid, malic acid, propionic acid. The acid is added tithe sourdough in an amount such that the pH thereof is from about 4.5 to about 6.5, preferably from about 5.0 to about 5.5. Sugars may be provided and mixed with the flour and water, possibly also culture and/or enzyme(s) and/or glycerol and/or acid. Sugars help the culture to become active more quickly.

In this application, "sugars" means the dry matter of any mono- and disaccharides, whatever the source. "Sugars" therefore include the dry matter of the glucose syrup, also called glucose-fructose syrup or fructose-glucose syrup.

The other ingredients are ingredients conventionally used in soft cake production such as: eggs, egg fractions (e.g.: egg yolk, egg white, egg powder), sugars, salt, water, leavening powder (such as sodium bicarbonate, sodium pyrophosphate acid, citric acid, gluconodelta-lactone and mixtures thereof), flavouring agents (e.g.: natural or artificial fruit flavours, vanilla extract, fruit, cocoa powder, coffee extract, tea extract), colouring agents, fat (e.g.: butter, margarine, vegetable oils, shortening), milk, milk fractions, starch (e.g.: modified or unmodified potato starch, modified or unmodified wheat starch, corn starch, manioc starch), hydrocolloids, emulsifiers (e.g.: mono and diglycerides of fatty acids, propylene glycol esters of fatty acids, lactic acids esters of mono and diglycerides of fatty acids, sodium stearoyl-2-lactylate), polyols (e.g.: glycerol, sorbitol), potassium sorbate, fibres, etc. Preferably, the other ingredients comprise at least egg and/or fat and/or sugars.

The soft cake itself may be produced by pouring the previously described soft cake batter is poured into a pan and baking it in the pan.

There is advantageously no proofing step between the step of pouring the soft cake batter into a pan and the step of baking the soft cake batter in the pan for producing the soft cake.

The method can also comprise providing a filling for the soft cake. The filling of the soft cake can be incorporated therein before baking, for example by alternatively pouring a first portion of soft cake batter, a portion of filling and a second portion of soft cake batter. This will create a single portion of filling inside the soft cake. More than one portion of filling can be provided into the soft cake by multiplying the steps of alternative pouring portions of soft cake batter and portions of filling. In this particular case more than one type of filling can be used.

The filling can also be provided after baking by injection or spreading. For example, the filling may be injected into the baked soft cake. Another example would be slicing the baked soft cake at least into two parts and spreading the filling between the parts. It is possible to use more than one filling. In an additional example, the filling may simply be spread on top of the soft cake.

The filling may be chosen amongst: a water-based filling and fat-based filling.

The present disclosure further provides a soft cake batter comprising flour, water and culture, wherein at least 25 wt.% of the flour is fermented flour, preferably 30 wt.%, more preferably at least 40 wt.%, still more preferably at least 60 wt., more preferably still at least 65 wt.%. Preferably the soft cake batter further comprises one or more enzymes and/or glycerol.

In this application, the word "fermented flour" means flour which has been fermented during the preparation of the batter, and which was initially added to the mixture as non-fermented flour. For example, for a soft cake batter comprising flour wherein 25 wt.% of the flour is fermented flour, the remaining 75 wt.% of the flour is freshly added post-fermentation to form the batter.

It is further provided a soft cake comprising at least about 40 wt.% cereals, at most about 30 wt.% sugars, preferably at most about 27.5 %. At most about 40 %, preferably at most about 35 %, of energy (calories) originate from fat. The weight percentage values are relative to total weight of the soft cake. To calculate the energy content of the product, for fibres, the value of 2 Kcal/g of fibres is used.

With at most about 30 wt.% sugars and at most about 40 % of energy originating from fat, the present soft cake is a healthy product. The soft cake preferably further comprises wholegrain cereal, for example about 5 wt.% relative to the total weight of the soft cake.

Sugars in the soft cake comprise at least carbohydrates with degree of polymerisation of 1 to 7 at a total amount of about 10 wt.% to about 30 wt.%, preferably about 10 wt.% to about 27.5 wt.%, more preferably about 15 wt.% to about 27.5 wt.%, weight percentage being relative to total weight of the soft cake.

Carbohydrates with degree of polymerisation of 1 to 7 include monosaccharides (such as glucose, galactose, fructose, xylose, ribose), disaccharides (such as sucrose, maltose, lactose, trehalose), maltotriose, maltotetraose, maltopentaose, maltohexaose and maltoheptaose.

Monosaccharides and disaccharides in the soft cake may be carbohydrates with degree of polymerisation of 1 and 2 at a total amount of about 10 wt.% to about 27.5 wt.%, preferably about 10 wt.% to about 25 wt.%, more preferably about 15 wt.% to about 25 wt.%, the weight percentage being relative to total weight of the soft cake.

The soft cake can further comprise at least about 5 wt.% fibres relative to the total weight of the soft cake. Suitable fibres can be:

- insoluble fibres such as those present in whole wheat, oat, barley, rye, rice, and especially in the bran of these cereals, fruits (such apple, citrus, prune, mango, fig, etc.), vegetables (such as tomato, carrot, celery, etc.) or cocoa;
- soluble fibres that generate a low viscosity in aqueous solution, usually referred to as "non-viscous soluble fibres", such as fructo-oligosaccharides, galacto-oligosaccharides, xylo-oligosaccharides, manno-oligosaccharides, polydextrose, resistant dextrins, cyclo-dextrins, acacia gum, larch gum, and the like;
- viscous soluble fibres, such as guar gum and other galactomannans (locust bean gum, tara gum, fenugreek), glucomannans or konjac flour, psyllium, xanthan, alginates, high-methoxy pectins, beta-glucans from oat or barley, arabinoxylans from wheat, chemically modified cellulosics; and
- mixtures thereof.

Insoluble fibres, soluble fibres (not viscous soluble fibres), and mixtures thereof are preferred fibres.

It will be understood that where these fibres are to be incorporated into the soft cake, they are in addition to any fibre which may be present in the flour or any other ingredients.

The water activity (Aw) of a product is a notion which is well known in the food industry field. This value measures the availability of water in a sample. In most cases, this water activity is not proportional to the water content of the product.

Methods for measuring Aw of a product are known to the person skilled in the art. For example, it can be measured with an Aqualab 4TE, or a Novasina. All Aw values indicated hereafter are measured at $25 \pm 0.2°C$.

The overall Aw value of the soft cake is about 0.50 to about 0.95, preferably about 0.65 to about 0.85, more preferably about 0.67 to about 0.80. If the Aw is below 0.50, the soft cake may be of an overly dry consistency. If the Aw is over 0.95, the product may be too sticky and its shelf life may be compromised.

The soft cake may comprise one or more fillings as mentioned above.

The soft cake has a shelf life of more than about 4 months, preferably more than about 6 months, more preferably between about 6 to about 12 months.

According to a first aspect there is provided a method for making a soft cake, the method comprising:

preparing a mixture comprising a first portion of flour, a fermenting agent, and water and allowing the mixture to proof,

combining the proofed mixture with a second portion of flour and, optionally, further ingredients to form a batter,

shaping and baking the batter to form a soft cake, wherein the soft cake comprises at least 40 wt% cereal material, and wherein the ratio of the first portion of flour to the second portion of flour is at least 1:3, wherein the method is conducted in the absence of a proofing step between the step of combining the proofed mixture with a second portion of flour to form a batter and the step of shaping and baking the batter to form a soft cake,

wherein the mixture further comprises one or more enzymes selected from the group consisting of amylases, amyloglucosidase, proteases, hemicellulases, xylanases, cellulase, pullulanase, pentosanases, lipases, phospholipases, transglutaminases, glucose oxydase or mixtures thereof,

wherein the one or more enzymes are in addition to any enzymes which may be present in any of the other starting materials,

wherein the one or more enzymes are present in the mixture in an amount of from 0.005 to 0.1 wt%, based on the total weight of the mixture before proofing, and

wherein the mixture is allowed to proof for from 30 minutes to 16 hours.

Preferably, the mixture is allowed to proof at a temperature of from 10°C to 55°C, preferably from 25°C to 45°C, more preferably about 40°C.

The mixture is allowed to proof for from 30 minutes to 16 hours, preferably from 4 hours to 16 hours, more preferably for about 8 hours. As explained above, it has been found that during the proofing, significant changes in the blend properties occur such as viscosity and pH drop. In addition, the total titrable acidity (TTA) value increases. Not only does the decrease in viscosity improve the processability of the batter, which is an issue especially for batters having a high flour content, but it also increases the final volume of the soft cake after the baking step.

Preferably, the soft cake has a shelf life of more than about 4 months, preferably more than about 6 months, more preferably between about 6 to about 12 months. The soft cakes of the present invention have a relatively low fat content, and so in order for a high stability to be obtained, the Aw value has to be relatively low. The present inventors have surprisingly discovered that the proofing of the blend provides for a higher quality soft cake (in terms of, for example, volume and softness), without adversely affecting (*i.e.* increasing) the Aw relative to prior art processes that lack the proofing step. Data to this effect is provided in Comparative Example 1 below.

Preferably, the ratio of the first portion of flour to the second portion of flour is from 1:3 to 5:1. If a ratio of below 1:3 is used, the changes in the blend properties described above are not sufficient to enable a pourable batter to be obtained.

Preferably, the soft cake comprises at most 50 wt.% of cereal material.

The mixture further comprises one or more enzymes selected from the group consisting of amylases, amyloglucosidase, proteases, hemicellulases, xylanases, cellulase, pullulanase, pentosanases, lipases, phospholipases, transglutaminases, glucose oxydase or mixtures thereof, wherein the one or more enzymes are present in the mixture in an amount of from 0.005 to 0.1 wt%, more preferably from 0.01 to 0.09 wt%, still more preferably from 0.03 to 0.07 wt%, based on the total weight of the mixturebefore proofing, wherein the one or more enzymes are in addition to any enzymes which may be present in any of the other starting materials. The advantages of including one or more enzymes in the mixture are given above.

The method is conducted in the absence of a proofing step between the step of combining the proofed mixture with a second portion of flour to form a batter and the step of shaping and baking the batter to form a soft cake. Surprisingly and advantageously, the present inventors have discovered that the absence of this second proofing step enables a greater cake height to be obtained in the final soft cake.

Preferably, the pH of the proofed mixture is from about 4.5 to about 6.5.

Measurement

*Viscosity measurements of initial mixture, sourdough and batter :*

3 kinds of measurements may be used:

1. Brookfield viscosity is measured with a Brookfield viscometer using spindle n°6 and a rotation speed of 2.5 rpm. Measurement time is set at 1 min at 20°C for the batter and at fermentation temperature for the sourdough. The Brookfield viscosity measures have been converted from cps to Pa.s via the conversion rate: 1 cp = 0.001 Pa.s.

2. Shear measurements (flow curves) were performed to evaluate the flow behavior of the sourdough and batter systems. Apparent viscosity was measured as a function of shear rate over a range of $10^{-3}$ - $10$ $s^{-1}$ at 25°C. This relies on the use of a high performance rheometer MCR300 (Anton Paar Physica) interfaced with a PC and equipped with a coaxial measuring unit (TEZ 150-PC) and a coaxial cylinder measurement system (CC27).

3. Bostwick flowability of the sourdough or the batter is measured using a Bostwick consistometer with a flow support presenting graduations at 0.5 cm intervals. The sourdough or the batter is placed in a reservoir of the consistometer, behind a spring loaded gate. Upon measurement, the gate is opened to let the sourdough or the batter flow onto the flow support for 1 min. Temperature of the measurement is the temperature of fermentation of the sourdough analysed. After 1 min, the length along which the sourdough or the batter has flowed on the flow support is noted.

Preferably, the viscosity of the initial mixture and the sourdough is measured using the shear method (MCR method). The viscosity of the batter is preferably measured using the Brookfield method.

*Volume measurements*

Soft cake volume is measured by seed displacement method. This method consists in:

- first filling a container of known volume $V_{container}$ and known weight $m_{container}$ with rapeseeds uniformly through tapping and smoothing the surface with a ruler, the weight $m_1$ of the rapeseeds needed to fill the container is measured;
- a soft cake is placed inside the container and rapeseeds are poured down to fill the container, the container is tapped and the surface is smoothed with a ruler, the weight $m_2$ of the rapeseeds needed to filled the container wherein the soft cake is placed is measured;
- the soft cake volume $V_{cake}$ is measured as follows:

$$V_{cake} = (1 - m_2/m_1) \cdot V_{container}.$$

From this measurement, soft cake density $D_{cake}$ is easily determined, by measuring first the weight $m_{cake}$ of the soft cake:

$$D_{cake} = m_{cake}/V_{cake}.$$

*Moisture measurement*

*Batter moisture:* Batter moisture is determined with a halogen moisture analyser HGR3 (Mettler Toledo). 2.7 g of batter is placed in the moisture analyser and heated during 9 min at 140°C.

*Soft cake moisture:* Soft cake moisture is determined with a halogen moisture analyser HGR3 (Mettler Toledo). 1.3 g of soft cake is placed in the moisture analyser and heated during 10 min at 130°C.

*Water activity measurement*

Water activity (Aw) is determined using Aqualab 4TE. A sample is placed in a specific recipient and analysed with Aqualab 4TE. The Aw value at 25°C is noted and referred to.

*Texture measurement (crumb resilience and soft cake hardness)*

5 mm on each side of a soft cake and the top part thereof are cut out in order to standardise the cake samples so that the height of the soft cake is 12 mm. The results are expressed as average and standard deviation of the texture assessment of six soft cakes.

Soft cake softness and resilience are measured with a TAXT+ from Sable Micro System Ltd, with a compression-relaxation-compression (CRC) program.

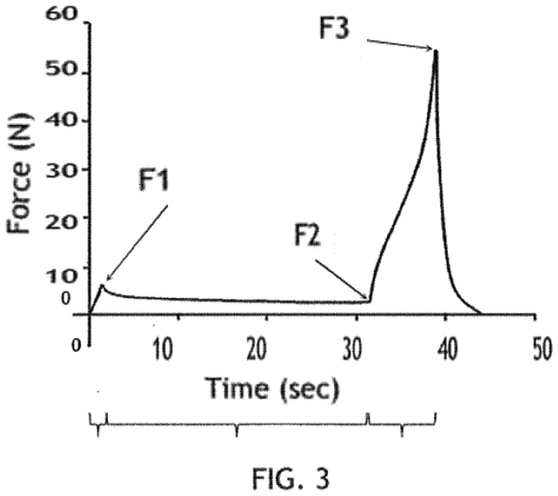

The CRC phases are (see figure 3):

- the soft cake is subjected to a 10 % compression, *i.e.* the soft cake is compressed from 12 mm in height to 10.8 mm with an aluminium cylinder and a crosshead speed of 1 mm/sec;
- the soft cake is then allowed to relax for 30 sec; and
- finally the soft cake is subjected to a 50 % compression, *i.e.* the soft cake is compressed from 12 mm in height to 6 mm, with the same aluminium cylinder and the same crosshead speed of 1 mm/sec.

Force F1 necessary for the 10 % compression (peak on the force=f(time) graph of figure 3 during the 10 % compression phase) is noted. Force F2 corresponding to the force virtually subjecting the soft cake after the relaxation phase is noted. Ratio R=(F1-F2)/F1 is computed. This ratio gives a relative value of the crumb resilience; the lower the ratio is, the higher the resilience.

Force F3 necessary for the 50 % compression (peak on the force=f(time) graph of figure 3 during the 50 % compression phase) is noted. Force F3 corresponds to the soft cake hardness expressed in mass m: m=F3/g, g being the standard gravity.

The invention will now be described in relation to the following non-limiting examples.

Example 1 (not within the scope of the invention)

A first example of method for producing soft cakes according to the above described method is detailed hereafter.

The following ingredients are mixed and proofed to form a sourdough (see Table 1):

Table 1

| Ingredients | Amount (g) |
|---|---|
| Wholegrain wheat flour | 18.9 |
| Water | 10.7 |
| Sucrose | 0.32 |
| Malted Barley Flour | 0.07 |
| Culture | 0.006 |
| Enzymes | 0.003 |
| | |
| **Total** | **29.999** |

More in particular, the flour of Table 1 is parted into four sub-portions. First sub-portion representing 50 % of the flour of Table 1 is mixed with the other ingredients of Table 1. The resulting mixture is then proofed during 30 min. A second sub-portion representing 16 % of the flour of Table 1 is subsequently added. Then the mixture is further proofed for 1.5 hours. After this proofing time, a third sub-portion representing 16 % of the flour of Table 1 is added. The resulting mixture is proofed for an additional 2 hours before the remaining flour of Table 1 is added. Then the Last proofing step is carried out for 20 hours. Proofing temperature is always 40°C.

The cereal flour (wholegrain wheat flour and malted barley flour) of the mixture represents 45.6 wt.% of the total flour used for the soft cake.

The following ingredients were then added into the sourdough and mixed in a high speed mixer (Robocoup™) until a homogeneous batter is obtained (see Table 2):

Table 2

| Ingredients | Amount (g) |
|---|---|
| Wheat flour | 22.6 |
| Eggs | 12.2 |

(continued)

| Ingredients | Amount (g) |
|---|---|
| Fat | 10.6 |
| Leavening agents | 0.9 |
| Sugar | 10.4 |
| Humectant | 5.9 |
| Others | 7.4 |
| | |
| **Total** | **70.0** |

Batter flowability is 3 cm after 1 min.

The batter is then poured into pans and baked at 180°C for 16 min.

The total cereal content of the soft cakes was 46.5 wt.%.

The final soft cakes present a nice uniform shape similar to soft cakes obtained from traditional recipe, an average measured volume of 74 mL and a measured density of 0.385 g/cm$^3$. The soft cakes have average measured hardness of 185 N, and average crumb resilience after four weeks of 0.569.

The average moisture content of the soft cake is 18.7 wt.% and the Aw value is 0.770.

Example 2

An example of a method for producing soft cakes batter according to the above described method is detailed hereafter.

The following ingredients are mixed together all at the same time and proofed to form a sourdough (Table 3):

Table 3

| Ingredients | Amount (g) |
|---|---|
| Cereal material | 57.77 |
| Water | 29.11 |
| Glycerol | 12.36 |
| Sugars | 0.69 |
| Culture | 0.01 |
| Enzymes | 0.07 |
| | |
| **Total** | **100.00** |

The cereal material used in the sourdough represents 70 wt.% of the total cereal material of the batter. The measured viscosity of the ingredient mixture before proofing is 98 Pa.s at a shear rate of 1 s$^{-1}$ (MCR method).

Proofing temperature is 25°C and proofing time is 8 hours.

Viscosity of the sourdough is 12 Pa.s at a shear rate of 1 s$^{-1}$.

Other ingredients were added into the sourdough forming a batter. Viscosity of the batter is 161 Pa.s (Brookfield method).

The batter is baked and soft cakes are obtained. Density of the soft cakes is 0.435 g/cm$^3$.

Volume of the soft cakes is 70.3 cm$^3$ with a nice regular shape (height is 30.6 mm).

Hardness of the soft cakes after ten weeks is 62 N, with product moisture (water content) of 18.6 %.

Soft cakes have nice softness and mouthfeel over shelf life.

Example 3

In this example, the same ingredients as mentioned in Table 3, in the same quantity, were processed as in example 2, except the proofing temperature is 40°C and proofing time is 40 min.

Viscosity of the obtained sourdough is 41 Pa.s at a shear rate of 1 s$^{-1}$. A significant drop in viscosity is thus observable.

Viscosity of the batter is 160 Pa.s (Brookfield method), thus not different from the batter of example 2.

The batter is baked and soft cakes are obtained. Density of the soft cakes is 0.420 g/cm$^3$.

Volume of the soft cakes is 73.6 cm$^3$ with a nice regular shape (height is 30.9 mm).

Soft cake hardness after ten weeks is 141 N, with product moisture (water content) of 17.3 %.

Soft cakes have nice softness and mouthfeel over shelf life.

Example 4

A further example of a method for producing soft cakes batter according to the above described method is detailed hereafter.

The following ingredients are mixed together and proofed to form a sourdough (Table 4):

Table 4

| Ingredients | Amount (g) |
|---|---|
| Cereal material | 66.29 |
| Water | 23.23 |
| Glycerol | 9.86 |
| Sugars | 0.55 |
| Culture | 0.01 |
| Enzymes | 0.05 |
| | |
| **Total** | **100.00** |

However, the addition of cereal material is carried out in 3 steps. First, 50 wt.% of the amount of cereal material of Table 4 is added with the other ingredients of Table 4 and proofed at 25°C during a proofing time of 30 min.

After these 30 min, 34 wt.% of the amount of cereal material of Table 5 is added into the proofed mixture then allowed to culture at 25°C during a proofing time of 90 min.

After these 90 min, the remaining amount of cereal material of Table 4 (*i.e.* 16 wt.%) is added and then the mixture is allowed to culture at 25°C during a proofing time of 6 hours (thus equalling a total proofing time of 8 hours).

The cereal material containing in the sourdough represents 100 wt.% of the total cereal material of the batter.

The measured viscosity of the ingredient mixture after the last incorporation of cereal material is 566 Pa.s at a shear rate of $1\ s^{-1}$. The measured viscosity of the sourdough is 156 Pa.s at a shear rate of $1\ s^{-1}$.

Other ingredients are added into the sourdough forming a batter. Viscosity of the batter is 142 Pa.s (Brookfield method). The batter is baked and soft cakes are obtained.

Density of the soft cakes is $0.410\ g/cm^3$. Volume of the soft cakes is $74.3cm^3$ with a nice regular shape. Hardness of the soft cakes after ten weeks is 39 N, with product moisture of 18.7 %.

Soft cakes have nice softness and mouthfeel throughout their shelf life.

Example 5 (not within the scope of the invention)

In this example, the same ingredients as mentioned in Table 4, in the same quantity, were processed as in example 4, but the proofing temperature is 15°C and the proofing time after the last incorporation of cereal material is 22 hours (thus equalling a total proofing time of 24 hours).

The cereal material used in the sourdough represents about 70 % of the total cereal material of the batter.

Viscosity of the mixture after the last incorporation of cereal material is 162 Pa.s at a shear rate of $1\ s^{-1}$. Viscosity of the sourdough is 9.2 Pa.s at a shear rate of $1\ s^{-1}$. A significant drop in viscosity after proofing is observable.

Then, the sourdough is mixed with other ingredients as detailed in Table 5 below to form a batter:

Table 5

| Ingredients | Amount (g) |
|---|---|
| Sourdough | 42.6 |
| Cereal material | 10.8 |
| Egg | 9.5 |

(continued)

| Ingredients | Amount (g) |
|---|---|
| Rapeseed oil | 10.5 |
| Sugars | 15.0 |
| Emulsifier | 2.1 |
| Others | 9.5 |
| | |
| **Total** | **100.0** |

Viscosity of the batter is 131 Pa.s (Brookfield method).

After baking, the obtained soft cake has a density of $0.41\ g/cm^3$ and a volume of $74.8\ cm^3$, whereas a soft cake obtained with the same ingredients but without proofing has a density of $0.46\ g/cm^3$ and a volume of $66\ cm^3$.

Hardness of the soft cakes after ten weeks is 113 N, with product moisture (water content) of 18.0 %.

The obtained soft cake develops well and presents a pleasant shape, good mouthfeel (soft, fresh, humid crumb, not crumbly, pleasant taste).

Comparative example 1

A comparative example of a soft cake that was not produced according to the above described method is detailed hereafter.

Table 6

| Ingredients | Amount (g) |
|---|---|
| Cereal material | 41.46 |
| Water | 10.86 |
| Sugars | 10.57 |
| Fat | 10.94 |
| Egg | 15.07 |
| Glycerol | 5.98 |
| Leavening agents | 0.97 |
| Others | 5.12 |
| | |
| **Total** | **100.00** |

In this comparative example 1, all the ingredients of table 6 are mixed together with a high speed mixer during 30 sec.

Then, the batter is poured and baked at 180°C for 16 min.

The obtained soft cakes present various and dissimilar shapes, a measured volume of 64 mL and a measured density of 0.477 g/cm$^3$. The various and dissimilar shapes are mainly due to the batter viscosity which is too high. The batter has no flowing properties measured thanks to the consistometer Bostwick. The soft cakes have an average measured hardness of 369 N and a crumb resilience of 0.491. The moisture content of the soft cakes is 18.5 wt.% with an Aw value of 0.780.

Therefore, this comparative example 1 shows that the soft cakes of example 1 exhibit uniform and regular shapes, while those of comparative example 1 present a poor standard deviation with respect to shape.

The average volume of the soft cakes of example 1 are 16 % higher than that of the soft cakes of comparative example 1, the density of the soft cakes of Example 1 is 19.2 % less than that of Comparative example 1.

Additionally, the soft cakes of example 1 are softer than those of Comparative example 1 (hardness is divided by about 2), and have a less elastic crumb. Thus, the crumb texture of the soft cakes of example 1 is closer to that of traditional soft cakes.

Further, the moisture of the soft cakes of example 1 is equivalent to that of the soft cakes of comparative example 1, but the Aw value of the soft cakes of example 1 is lower than that of Comparative example 1. Indeed as the batter viscosity in the comparative example 1 is higher it is much more complicated to remove water from the product during baking. It should be an issue regarding the targeted Aw for ensure safe microbiological shelf life.

## Claims

1. A method for making a soft cake, the method comprising:

   preparing a mixture comprising a first portion of flour, a fermenting agent, and water and allowing the mixture to proof,
   combining the proofed mixture with a second portion of flour and, optionally, further ingredients to form a batter,
   shaping and baking the batter to form a soft cake,
   wherein the soft cake comprises at least 40 wt% cereal material, and wherein the ratio of the first portion of flour to the second portion of flour is at least 1:3,
   wherein the method is conducted in the absence of a proofing step between the step of combining the proofed mixture with a second portion of flour to form a batter and the step of shaping and baking the batter to form a soft cake,
   wherein the mixture further comprises one or more enzymes selected from the group consisting of amylases, amyloglucosidase, proteases, hemicellulases, xylanases, cellulase, pullulanase, pentosanases, lipases, phospholipases,

transglutaminases, glucose oxidase or mixtures thereof,
wherein the one or more enzymes are in addition to any enzymes which may be present in any of the other starting materials,
wherein the one or more enzymes are present in the mixture in an amount of from 0.005 to 0.1 wt%, based on the total weight of the mixture before proofing, and
wherein the mixture is allowed to proof for from 30 minutes to 16 hours.

2. The method of claim 1, wherein the mixture is allowed to proof at a temperature of from 10°C to 55°C, preferably from 25°C to 45°C, more preferably 40°C.

3. The method of claim 1 or claim 2, wherein the mixture is allowed to proof for from 4 hours to 16 hours, preferably for 8 hours.

4. The method of any of claims 1 to 3, wherein the soft cake has a shelf life of more than 4 months, preferably more than 6 months, more preferably between 6 to 12 months.

5. The method of any of claims 1 to 4, wherein the ratio of the first portion of flour to the second portion of flour is from 1:3 to 5:1.

6. The method of any of claims 1 to 5, wherein the soft cake comprises at most 50 wt.% of cereal material.

7. The method of any of claims 1 to 6, wherein the one or more enzymes are present in the mixture in an amount of from 0.01 to 0.09 wt%, more preferably from 0.03 to 0.07 wt%, based on the total weight of the mixture before proofing.

8. The method of any of claims 1 to 7, wherein the pH of the proofed mixture is from about 4.5 to about 6.5.

9. The method of any of claims 1 to 8, wherein the method further comprises packaging the soft cake.

## Patentansprüche

1. Verfahren zum Herstellen eines Soft-Cake, wobei das Verfahren Folgendes umfasst:

   Herstellen einer Mischung, umfassend einen ersten Teil Mehl, ein Gärmittel und Wasser, und Gehenlassen der Mischung,
   Kombinieren der gegangenen Mischung mit einem zweiten Teil Mehl und wahlweise weiteren Inhaltsstoffen, um einen Backteig zu bilden,
   Formen und Backen des Backteigs, um einen Soft-Cake zu bilden,

wobei der Soft-Cake mindestens 40 Gew.-% Getreidematerial umfasst, und wobei das Verhältnis des ersten Teils Mehl zum zweiten Teil Mehl mindestens 1:3 beträgt,

wobei das Verfahren in Abwesenheit eines Schritts des Gehenlassens zwischen dem Schritt des Kombinierens der gegangenen Mischung mit einem zweiten Teil Mehl, um einen Backteig zu bilden, und dem Schritt des Formens und Backens des Backteigs, um einen Soft-Cake zu bilden, durchgeführt wird,

wobei die Mischung ferner ein oder mehrere Enzyme umfasst, die ausgewählt sind aus der Gruppe bestehend aus Amylasen, Amyloglucosidase, Proteasen, Hemicellulasen, Xylanasen, Cellulase, Pullulanase, Pentosanasen, Lipasen, Phospholipasen, Transglutaminasen, Glucoseoxydase oder Mischungen davon,

wobei das eine oder die mehreren Enzyme zusätzlich zu jeglichen Enzymen vorliegen, die in einem der anderen Ausgangsmaterialien vorhanden sein können,

wobei das eine oder die mehreren Enzyme in der Mischung in einer Menge von 0,005 bis 0,1 Gew.-%, bezogen auf das Gesamtgewicht der Mischung vor dem Gehenlassen, vorhanden sind, und

wobei die Mischung für von 30 min bis 16 Stunden gehen gelassen wird.

**2.** Verfahren nach Anspruch 1, wobei die Mischung bei einer Temperatur von 10 °C bis 55 °C, vorzugsweise von 25 °C bis 45 °C, mehr bevorzugt 40 °C, gehen gelassen wird.

**3.** Verfahren nach Anspruch 1 oder Anspruch 2, wobei die Mischung für von 4 Stunden bis 16 Stunden, vorzugsweise für 8 Stunden gehen gelassen wird.

**4.** Verfahren nach einem der Ansprüche 1 bis 3, wobei der Soft-Cake eine Haltbarkeitsdauer von mehr als 4 Monaten, vorzugsweise von mehr als 6 Monaten, mehr bevorzugt von zwischen 6 bis 12 Monaten aufweist.

**5.** Verfahren nach einem der Ansprüche 1 bis 4, wobei das Verhältnis des ersten Teils Mehl zum zweiten Teil Mehl von 1:3 bis 5:1 beträgt.

**6.** Verfahren nach einem der Ansprüche 1 bis 5, wobei der Soft-Cake höchstens 50 Gew.-% Getreidematerial umfasst.

**7.** Verfahren nach einem der Ansprüche 1 bis 6, wobei das eine oder die mehreren Enzyme in der Mischung in einer Menge von 0,01 bis 0,09 Gew.-%, mehr bevorzugt von 0,03 bis 0,07 Gew.-%, bezogen auf das Gesamtgewicht der Mischung vor dem Gehenlassen, vorhanden sind.

**8.** Verfahren nach einem der Ansprüche 1 bis 7, wobei der pH-Wert der gegangenen Mischung von etwa 4,5 bis etwa 6,5 beträgt.

**9.** Verfahren nach einem der Ansprüche 1 bis 8, wobei das Verfahren ferner das Verpacken des Soft-Cake umfasst.

**Revendications**

**1.** Procédé de fabrication d'un gâteau moelleux, le procédé comprenant :

la préparation d'un mélange comprenant une première partie de farine, un agent de fermentation et de l'eau et le fait de permettre l'apprêt du mélange,

la combinaison du mélange apprêté avec une deuxième partie de farine et, éventuellement, des ingrédients supplémentaires pour former une pâte lisse,

la mise en forme et la cuisson de la pâte lisse pour former un gâteau moelleux,

dans lequel le gâteau moelleux comprend au moins 40 % en poids de matière céréalière, et dans lequel le rapport de la première partie de farine à la deuxième partie de farine est d'au moins 1:3,

dans lequel le procédé est effectué en l'absence d'une étape d'apprêt entre l'étape de combinaison du mélange apprêté avec une deuxième partie de farine pour former une pâte lisse et l'étape de mise en forme et de cuisson de la pâte lisse pour former un gâteau moelleux,

dans lequel le mélange comprend en outre une ou plusieurs enzymes choisies dans le groupe constitué d'amylases, amyloglucosidase, protéases, hémicellulases, xylanases, cellulase, pullulanase, pentosanases, lipases, phospholipases, transglutaminases, glucose oxydase ou leurs mélanges,

dans lequel la ou les enzymes sont en plus de n'importe quelles enzymes qui peuvent être présentes dans n'importe laquelle des autres matières de départ,

dans lequel la ou les enzymes sont présentes dans le mélange en une quantité de 0,005 à 0,1 % en poids sur la base du poids total du mélange avant apprêt, et

dans lequel on laisse apprêter le mélange pendant 30 minutes à 16 heures.

**2.** Procédé selon la revendication 1, dans lequel on laisse apprêter le mélange à une température allant de 10 °C à 55 °C, de préférence de 25 °C à 45 °C, plus préférablement 40 °C.

3. Procédé selon la revendication 1 ou la revendication 2, dans lequel on laisse apprêter le mélange pendant 4 heures à 16 heures, de préférence pendant 8 heures.

4. Procédé selon l'une quelconque des revendications 1 à 3, dans lequel le gâteau moelleux a une durée de conservation de plus de 4 mois, de préférence plus de 6 mois, plus préférablement entre 6 et 12 mois.

5. Procédé selon l'une quelconque des revendications 1 à 4, dans lequel le rapport de la première partie de farine à la deuxième partie de farine va de 1:3 à 5:1.

6. Procédé selon l'une quelconque des revendications 1 à 5, dans lequel le gâteau moelleux comprend au plus 50 % en poids de matière céréalière.

7. Procédé selon l'une quelconque des revendications 1 à 6, dans lequel la ou les enzymes sont présentes dans le mélange en une quantité de 0,01 à 0,09 % en poids, plus préférablement de 0,03 à 0,07 % en poids, sur la base du poids total du mélange avant apprêt.

8. Procédé selon l'une quelconque des revendications 1 à 7, dans lequel le pH du mélange apprêté va d'environ 4,5 à environ 6,5.

9. Procédé selon l'une quelconque des revendications 1 à 8, dans lequel le procédé comprend en outre l'emballage du gâteau moelleux.

FIG. 1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008092907 A
- EP 1145637 A

**Non-patent literature cited in the description**

- *Marmorkuchen mit Sauerteig nach Pöt,* 14 March 2012, http://www.ploetzblog.de/2012/03/14/marmorkuchen-mit-sauerteig-nach-poet